# EUROPÄISCHE PATENTSCHRIFT

(11) **EP 1 035 959 B1**
(45) Veröffentlichungstag und Bekanntmachung des Hinweises auf die Patenterteilung: **31.10.2001**
(21) Anmeldenummer: 98963513.1
(22) Anmeldetag: 25.11.1998
(51) Int. Cl.: B29C 45/17, B29C 45/16, B29C 45/04

(54) **SPRITZGIESSMASCHINE MIT VERSCHIEBBAREN FORMEN, HALTEVORRICHTUNG SOWIE FORMTRÄGER FÜR EINE SOLCHE SPRITZGIESSMASCHINE**
INJECTION MOLDING MACHINE WITH DISPLACEABLE MOLDS, A HOLDING DEVICE AND A DIE HOLDER FOR SUCH AN INJECTION MOLDING MACHINE
MACHINE DE MOULAGE PAR INJECTION COMPORTANT DES MOULES POUVANT ETRE DEPLACES, ET DISPOSITIF DE FIXATION ET PORTE-MOULE DESTINES A UNE TELLE MACHINE DE MOULAGE PAR INJECTION

(30) Priorität: 03.12.1997 EP 97121248
(43) Veröffentlichungstag der Anmeldung: 20.09.2000
(60) Teilanmeldung: 01119587.2
(73) Patentinhaber: FOBOHA GmbH, D-77716 Haslach (DE)
(72) Erfinder: BODMER, Werner, D-77716 Haslach (DE); ARMBRUSTER, Rainer, D-77709 Wolfach (DE)
(74) Vertreter: Frei, Alexandra Sarah
(86) Internationale Anmeldenummer: EP9807600
(87) Internationale Veröffentlichungsnummer: WO9928108

(56) Entgegenhaltungen:
- EP-A- 0 249 703
- EP-A- 0 549 928
- PATENT ABSTRACTS OF JAPAN vol. 18, no. 91 (E-1508), 15. Februar 1994 & JP 05 299458 A (MITSUBISHI ELECTRIC CORP), 12. November 1993

## Beschreibung

Die Erfindung betrifft eine Haltevorrichtung für Formen, Formhälften oder Formträger in einer Spritzgiessmaschine, ferner einen Formträger, einsetzbar in diese Haltevorrichtung, ferner eine Spritzgiessmaschine, beinhaltend diese Haltevorrichtung, und ausserdem ein Verfahren zum Entfernen bzw. Einsetzen einer Form, Formhälfte oder eines Formträgers gemäss den Oberbegriffen der unabhängigen Patentansprüche.

Bekannte Spritzgiessmaschinen haben oft den Nachteil von hohen Rüst- oder Umrüstzeiten und -kosten, weil das Einsetzen, Entfernen oder Auswechseln von Formen kompliziert und zeitaufwendig ist. Die Form, Formhälfte bzw. ihr Träger ist ja bei den bekannten Spritzgiessmaschinen ein Teil der Maschine selbst; das bedeutet, dass bei einem Formwechsel ein Maschinenteil ausgewechselt werden muss. Dies wird durch die Tatsache erschwert, dass zwecks Kühlung, Hydraulikbetätigung etc. verschiedene Medien wie elektrischer Strom, Wasser (kalt und heiss), Öl (kalt und heiss), Luft und/oder andere Gase in die Spritzgiessform eingeleitet werden. Die entsprechenden Zu- und Abführleitungen sind an der Form bzw. den Formhälften angeschlossen; bei einem Formwechsel müssen sie von der alten Form gelöst und an der neuen Form befestigt werden. Diese Prozedur braucht Zeit und Arbeitskräfte. Der Einsatz herkömmlicher Spritzgiessmaschinen ist entsprechend kostspielig und wenig flexibel, wenn die Formen häufig gewechselt werden müssen. Moderne Spritzgiessbetriebe müssen jedoch in der Lage sein, Spritzgiessformen einfach und rasch auszuwechseln, um ihre Produktion sofort sich ändernden Kundenwünschen und anderen sich ständig ändernden Forderungen und Bedingungen anzupassen.

Für viele Anwendungen des Spritzgiessverfahrens ist es vorteilhaft, wenn die Spritzgiessform oder eine Hälfte derselben relativ zur Spritzgiessmaschine drehbar ist. Mit einer solchen drehbaren Form besteht z. B. die Möglichkeit, zu verarbeitende Schmelze (bspw. Kunststoffschmelze) aus mehreren (typischerweise zwei gegenüberliegenden) Einspritzstationen in die Form einzuspritzen. Damit können erstens gleichzeitig Formteile mit verschiedenen Geometrien, verschiedenen Farben oder aus verschiedenen Materialien hergestellt werden. Damit können zweitens auch Formteile aus mehreren Komponenten hergestellt werden (Mehrkomponentenverfahren), also Formteile, welche verschiedene Farben aufweisen oder aus mehreren Materialien bestehen (Montagespritzguss). Wenn nur eine Einspritzstation verwendet wird, bringt eine drehbare Form den Vorteil von schnelleren Zykluszeiten. Nach einem ersten Einspritzzyklus kann nämlich die Form gedreht werden, und die soeben engespritzten Formteile können abkühlen und ausgestossen werden, während bereits ein zweiter Einspritzzyklus stattfindet. Bei drehbaren Formen stehen mehr Kavitäten zur Verfügung als bei nichtdrehbaren Formen. Ausserdem erlauben drehbare Formen Zwischenstationen für verschiedene Optionen.

Spritzgiessmaschinen mit drehbaren Formen oder Formhälften sind bekannt. So offenbart bspw. das Patent US-4,330,257 eine Spritzgiessmaschine mit zwei relativ zueinander beweglichen Formaufspannplatten und einem dazwischenliegenden Kernträgerkörper, welcher mindestens vier Seitenflächen hat und um eine Achse senkrecht zur Bewegungsrichtung der Formaufspannplatten drehbar ist. Auf beiden Formaufspannplatten befinden sich erste Formhälften mit formgebenden Hohlräumen; die Seitenflächen des Kernträgerkörpers sind mit fingerartigen Ausformungen versehen und bilden zusammen mit diesen Fingern zweite Formhälften. Werden die beiden Formaufspannplatten gegen den Kernträgerkörper gepresst, so werden die ersten und zweiten Formhälften zu Formen zusammengefügt, in welche aus zwei Einspritzstationen Schmelze eingespritzt wird. Die so entstandenen Formteile werden auf den Fingern aus den Hohlräumen entfernt.

Die Patentschrift DE-36 20 175 offenbart eine Spritzgiessmaschine mit mindestens zwei Plastifizier- und Einspritzeinheiten und zwei Formaufspannplatten. Die eine Formaufspannplatte ist fest, die andere auf Holmen verschiebbar. Zwischen den Formaufspannplatten befindet sich ein drehbarer und ebenfalls verschiebbarer prismatischer Kernträgerkörper. Auf den Formaufspannplatten befinden sich erste, auf dem Kernträgerkörper zweite Formhälften der Spritzgiessformen. Durch Verschieben der verschiebbaren Formaufspannplatte und des Kernträgerkörpers werden die ersten und zweiten Formhälften zu einer Spritzgiessform zusammengefügt.

Bei solchen Spritzgiessmaschinen mit drehbaren Formen oder Formhälften macht sich der Nachteil der hohen Umrüstzeiten wegen schwer auswechselbarer Formen besonders deutlich bemerkbar. Die Formen oder Formhälften sind jeweils mit einem Drehmechanismus verbunden, dessen Entfernung von den Formen oder Formhälften den Formwechsel zusätzlich erschwert.

Es ist Aufgabe der vorliegenden Erfindung, eine Haltevorrichtung für eine Form, Formhälfte oder einen Formträger in einer Spritzgiessmaschine zu schaffen, welche die Rüst- und Umrüstzeiten massgeblich verkürzt, welche also ein einfaches und rasches Entfernen, Einsetzen bzw. Auswechseln der Form, Formhälfte oder des Formträgers ermöglicht. Ferner soll ein in diese Haltevorrichtung einsetzbarer Formträger geschaffen werden. Ferner soll eine Spritzgiessmaschine geschaffen werden, welche die obigen Nachteile nicht aufweist und bei welcher insbesondere kurze Rüst- und Umrüstzeiten möglich sind. Ausserdem soll ein Verfahren zum einfachen und raschen Entfernen, Einsetzen bzw. Auswechseln der Form, Formhälfte oder des Formträgers angegeben werden.

Die Aufgabe wird gelöst durch die erfindungsgemässe Haltevorrichtung, den erfindungsgemässen Formträger, die erfindungsgemässe Spritzgiessmaschine, und die erfindungsgemässen Verfahren, wie sie durch die unabhängigen Patentansprüche definiert sind.

Die Erfindung bricht mit dem herkömmlichen Konzept, gemäss welchem die Spritzgiessform bzw. ihr Träger ein Bestandteil der Spritzgiessmaschine selbst ist. Stattdessen betrachtet sie die Spritzgiessform, die Formhälfte bzw. ihren Träger als Modul, welches in die Spritzgiessmaschine eingesetzt werden und beliebig ausgewechselt werden kann. Zu diesem Zweck wird eine Haltevorrichtung für mindestens eine Form, Formhälfte oder einen Formträger in einer Spritzgiessmaschine geschaffen. Diese Haltevorrichtung weist mindestens zwei relativ zueinander verschiebbare und eventuell drehbare Haltevorrichtungen zum lösbaren Einspannen der Form, Formhälfte oder des Formträgers auf. Die Haltevorrichtung, nicht die Form selbst, ist ein Bestandteil der Spritzgiessmaschine. An der erfindungsgemässen Haltevorrichtung sind alle benötigten Medienleitungen fest angeschlossen. Hingegen können verschiedene Spritzgiessformen ohne Aufwand in Haltemittel der Haltevorrichtung eingesetzt und wieder ausgewechselt werden. Die verlustlose Übergabe der verschiedenen Medien von der Haltevorrichtung in die Form und umgekehrt ist durch normierte Schnittstellen gewährleistet.

Eine bevorzugte Ausführungsform der erfindungsgemässen Haltevorrichtung beinhaltet zwei Verschiebeeinheiten, auf welchen je eine Dreheinheit angebracht ist. Auf jeder Dreheinheit befinden sich Haltemittel für Formen, Formhälften oder deren Träger. Die Verschiebeeinheiten sind relativ zueinander in einer Richtung verschiebbar, bspw. auf je zwei zueinander parallelen Holmen. Jede Dreheinheit ist derart auf der jeweiligen Verschiebeeinheit drehbar befestigt, dass sie mit der Verschiebeeinheit verschiebbar und um eine mit der Verschiebeeinheit verschiebbare, zur Verschieberichtung senkrechten Achse drehbar ist. Die Haltemittel sind derart an den Verschiebeeinheiten angebracht, dass sie einander gegenüberliegen, ihre Achsen zusammenfallen und die Haltemittel einen bestimmten Abstand voneinander aufweisen, wenn sich die zwei Verschiebeeinheiten in einer bestimmten gegenseitigen Lage befinden. In dieser einen bestimmten gegenseitigen Lage kann in den Abstand zwischen den beiden Haltemitteln eine Form, eine Formhälfte oder ein Formträger reversibel eingespannt werden.

Die in die erfindungsgemässe Haltevorrichtung eingesetzte Form, die Formhälfte oder der Formträger in der Haltevorrichtung kann in einer Richtung verschoben und um eventuell eine zu dieser Richtung senkrechte, verschiebbare Achse gedreht werden. Die Verschiebung der Haltevorrichtung kann mittels bspw. hydraulischer und/oder elektrischer Antriebsmittel betätigt und mit Kontroll- oder Steuermitteln kontrolliert oder gesteuert werden. Die Drehung der Haltemittel kann mittels bspw. Drehantriebsmittel betätigt und mit Drehkontroll- oder Drehsteuermitteln kontrolliert oder gesteuert werden.

Ein erfindungsgemässer Formträger ist vorzugsweise als prismatischer Drehblock ausgebildet, dessen beiden Grundflächen den beiden Haltemitteln zugewandt sind. Der Drehblock weist mindestens zwei Seitenflächen auf, wobei mindestens eine Seitenfläche eine Spritzgiessform oder eine Spritzgiessformhälfte trägt.

Die erfindungsgemässe Haltevorrichtung wird vorzugsweise zwischen zwei Formaufspannplatten einer Spritzgiessmaschine eingesetzt. Dabei ist vorzugsweise eine Formaufspannplatte fest mit der Maschine verbunden, die andere Formausfspannplatte in derselben Richtung wie die Verschiebeeinheiten der Haltevorrichtung verschiebbar. Die Formaufspannplatten tragen je eine erste Formhälfte. Mindestens eine, vorzugsweise aber zwei oder mehr Seitenflächen des prismatischen Drehblocks tragen zweite Formhälften. Erste und/oder zweite Formhälften sind mit formgebenden Hohlräumen ausgestattet. Wenn die Formaufspannplatten gegen den Drehblock gepresst werden, fügen sich die ersten und zweiten Formhälften zu Spritzgiessformen zusammen, in welche aus Einspritzstationen Schmelze eingespritzt werden kann.

Zum Entfernen einer Form, Formhälfte oder eines Formträgers aus der erfindungsgemässen Haltevorrichtung werden die Haltemittel relativ zueinander so weit verschoben, dass sie die Form, Formhälfte oder den Formträger freigeben. Daraufhin wird die Form, Formhälfte oder der Formträger aus der Haltevorrichtung entnommen.

Zum Einsetzen einer Form, Formhälfte oder eines Formträgers in die erfindungsgemässe Haltevorrichtung werden die Haltemittel relativ zueinander so weit verschoben, dass sie einen das Einsetzen der Form, Formhälfte oder des Formträges erlaubenden Abstand voneinander aufweisen. Die Form, Formhälfte oder der Formträger wird in die Haltevorrichtung eingesetzt. Daraufhin werden die Haltemittel relativ zueinander in die eine bestimmte gegenseitige Lage verschoben, so dass sie die Form, Formhälfte oder den Formträger einspannen.

Die erfindungsgemässe Haltevorrichtung lässt sich in bereits bestehende Spritzgiessmaschinen einbauen. Sie weist sowohl die Vorteile der bekannten Spritzgiessmaschinen mit drehbaren Formen als auch den Vorteil des einfachen Formwechsels auf.

Im folgenden wird eine bevorzugte Ausführungsform der erfindungsgemässen Haltevorrichtung innerhalb eines Teils einer Spritzgiessmaschine anhand von Figuren detailliert beschrieben. Dabei zeigen:
- Fig. 1: eine Draufsicht auf eine erste Ausführungsform der erfindungsgemässen Haltevorrichtung innerhalb eines Teils einer Spritzgiessmaschine,
- Fig. 2: eine Frontalansicht der Haltevorrichtung von Fig. 1,
- Fig. 3: eine teilweise geschnittene Frontalansicht einer zweiten Ausführungsform der erfindungsgemässen Haltevorrichtung und
- Fig. 4: eine Draufsicht auf einen Teil der Haltevorrichtung von Fig. 3.

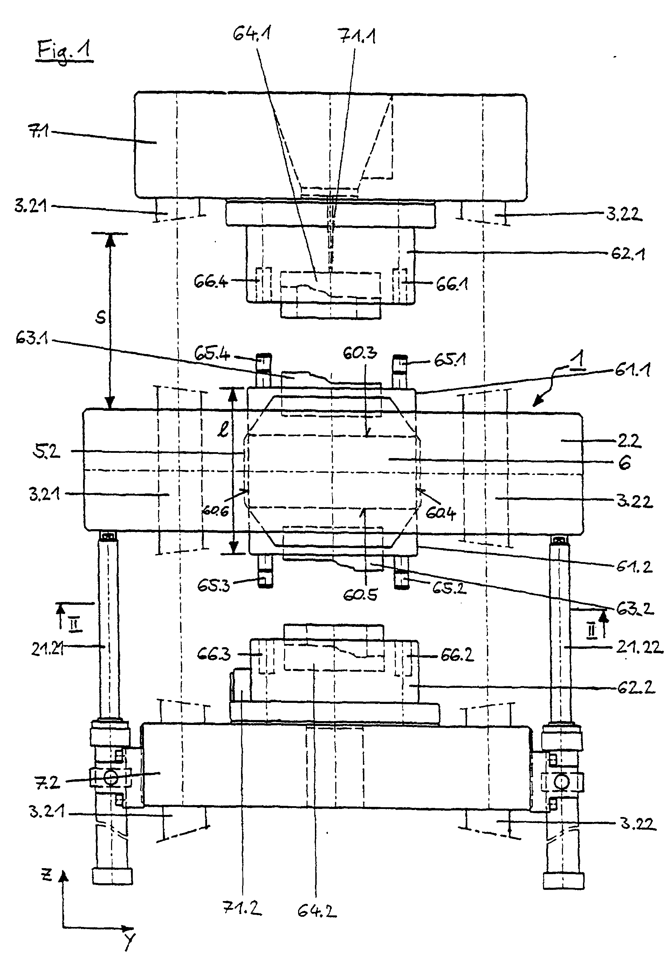

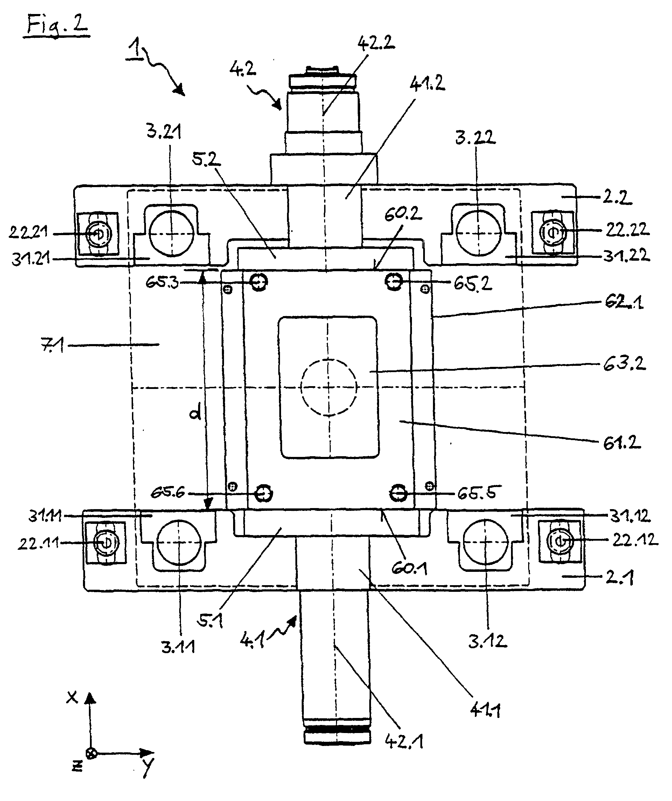

Die in den **Figuren 1 und 2** dargestellte Ausführungsform der erfindungsgemässen Haltevorrichtung 1 beinhaltet eine erste Verschiebeeinheit 2.1 und eine zweite Verschiebeeinheit 2.2. Die Verschiebeeinheiten 2.1, 2.2 sind bspw. als Metallplatten ausgebildet. Sie werden von je zwei zueinander parallelen Holmen 3.11, 3.12, 3.21, 3.22 getragen und sind auf diesen mit Hilfe von Führungen 31.11, 31.12, 31.21, 31.22, bspw. zylindrischen Gleitführungen, linear geführt, so dass sie parallel zueinander in einer Richtung z verschiebbar sind. Die Verschiebung kann durch (nicht dargestellte) Kontroll- oder Steuermittel wie hydraulische, mechanische oder elektronische Wegmesssysteme, Endschalter etc. kontrolliert und/oder gesteuert werden.

Auf der ersten Verschiebeeinheit 2.1 ist eine erste Dreheinheit 4.1 und an der zweiten Verschiebeeinheit 2.2 ist eine zweite Dreheinheit 4.2 befestigt. Jede Dreheinheit 4.1, 4.2 ist mit der jeweiligen Verschiebeeinheit 2.1, 2.2 verschiebbar; mindestens ein Teil einer jeden Dreheineheit 4.1, 4.2, bspw. eine Welle 41.1, 41.2, ist um eine mit der Verschiebeeinheit 2.1, 2.2 verschiebbare, zur Verschieberichtung z senkrechten Achse 42.1, 42.2 drehbar. Die Drehung der Dreheinheiten 4.1, 4.2 kann bspw. hydraulisch und/oder elektrisch betätigt werden, bspw. mit (nicht eingezeichneten) Drehantriebsmitteln wie einer Hydraulik oder einem Servomotor. Die Drehantriebsmittel können auf einer einzigen Verschiebeeinheit 2.2 oder auch auf beiden Verschiebeeinheiten 2.1, 2.2 angebracht sein. Zwischen den Drehantriebsmitteln und der Dreheinheit 4.1, 4.2 kann ein Getriebe und/oder eine Kupplung (nicht dargestellt) vorgesehen sein. Die Drehung der Dreheinheiten 4.1, 4.2 kann mit Hilfe von (nicht dargestellten) Drehkontroll- oder Drehsteuermitteln wie Drehgebern, Endschaltern etc. kontrolliert und/oder gesteuert werden.

An den Dreheinheiten 4.1, 4.2, bspw. an den einen Enden der Wellen 41.1, 41.2, sind Haltemittel 5.1, 5.2 für erste Formhälften 61.1, 61.2 oder Formträger befestigt. Der Formträger ist in dieser Ausführungsform als Drehblock 6 gestattet. Die Haltemittel 5.1, 5.2 können bspw. als Trägerplatten mit entprechenden (nicht detailliert dargestellten) reversiblen Befestigungsmitteln ausgebildet sein. Die Verschiebeeinheiten 2.1, 2.2 sind derart gegenseitig angeordnet bzw. verschiebbar, dass in einer bestimmten gegenseitigen Lage der Verschiebeeinheiten 2.1, 2.2 die beiden Dreheinheiten 4.1, 4.2 einander gegenüberliegen, ihre Achsen 42.1, 42.2 zusammenfallen und die beiden Haltemittel 5.1, 5.2 einen bestimmten Abstand d voneinander aufweisen. Die Figuren 1-4 zwigen die Verschiebeeinheiten 2.1, 2.2 in dieser einen bestimmten gegenseitigen Lage.

In den Abstand d zwischen den beiden Haltemitteln 5.1, 5.2 ist ein prismatischer Drehblock 6 eingesetzt. In diesem Ausführungsbeispiel hat der Drehblock 6 die Form eines Würfels mit zwei Grundflächen 60.1, 60.2 und vier (nicht notwendigerweise gleich grossen) Seitenflächen 60.3-60.6; er könnte jedoch auch eine andere, vorzugsweise gerade Anzahl Seitenflächen aufweisen. Die beiden Grundflächen 60.1, 60.2 des Drehblocks 6 sind den beiden Dreheinheiten 4.1, 4.2 zugewandt. Der Drehblock 6 in der Haltevorrichung 1 kann in einer Richtung z verschoben und um eine zu dieser Richtung z senkrechte, verschiebbare Achse gedreht werden; diese Achse ist durch die zusammenfallenden Achsen 42.1, 42.2 der Dreheinheiten 4.1, 4.2 definiert. Wenn der Drehblock 6 eingesetzt ist, verbindet er die beiden Dreheinheiten 4.1, 4.2 drehfest miteinander; deshalb genügt ein einziges Drehantriebsmittel zur Drehung beider Dreheinheiten 4.1, 4.2 und des Drehblocks 6.

Das Öffnen der erfindungsgemässen Haltevorrichtung 1 geschieht beispielsweise, indem die zweite, obere Verschiebeeinheit 2.2 gegenüber der den Drehblock 6 tragenden ersten, unteren Verschiebeeinheit 2.1 eine genügend grosse Wegstrecke s weit verschoben wird. Genügend gross heisst, dass die Wegstrecke s grösser sein muss als die Länge l des Drehblocks 6, d. h. s > l. Ein solcher verschobener oder offener Zustand der Haltevorrichtung 1 erlaubt einen schnellen und einfachen Ausbau bzw. Wechsel des Drehblocks 6.

Zum Einspannen des Drehblocks 6 kann bspw. die zweite, obere Dreheinheit 4.2 wie ein Stempel in x-Richtung beweglich sein. Zum Entfernen des Drehblocks 6 wird die zweite Dreheinheit 4.2 zunächst eine kleine Wegstrecke nach oben, in +x-Richtung, gefahren; dann wird die zweite Verschiebeeinheit 2.2 bspw. in +z-Richtung verschoben und der Drehblock 6 entfernt. Zum Einsetzen des Drehblocks 6 wird der Drehblock auf das erste Haltemittel 5.1 aufgesetzt, die zweite Verschiebeeinheit 2.2 durch Verschieen bspw. in -z-Richtung in die eine bestimmte Lage mit der ersten Verschiebeeinheit 2.1 gebracht, so dass die Achsen 42.1, 42.2 zusammenfallen, und die zweite Dreheinheit 4.2 nach unten, in -x-Richtung, gesenkt, bis der Drehblock 6 fest eingespannt ist.

Die erfindungsgemässe Haltevorrichtung 1 wird vorzugsweise zwischen zwei Formaufspannplatten 7.1, 7.2 einer (weiter nicht dargestellten) Spritzgiessmaschine eingesetzt. Dabei ist vorzugsweise eine Formaufspannplatte 7.1 fest mit der Maschine verbunden, die andere Formausfspannplatte 7.2 durch die Holmen 3.11, 3.12, 3.21, 3.22 linear geführt und in derselben Richtung z wie die Verschiebeeinheiten 2.1, 2.2 der Haltevorrichtung 1 verschiebbar. Diese Verschiebung wird durch (nicht dargestellte) Antriebsmittel bewirkt. Die Verschiebeeinheiten 2.1, 2.2 sind mittels hydraulischer, mechanischer oder elektritscher Antriebsmittel 21.11, 21.12 (nicht sichtbar) und 21.21, 21.22 gegenüber der verschiebbaren Formaufspannplatte 7.2 verschiebbar; die Antriebsmittel 21.11, 21.12, 21.21, 21.22 greifen an Angriffsstellen 22.11, 22.12, 22.21, 22.22 an den Verschiebeeinheiten 2.1, 2.2 an. Die Verschiebung der Verschiebeeinheiten 2.1, 2.2 wird hydraulisch, mechanisch oder elektrisch betätigt und mit einem (nicht dargestellten) hydraulischen, mechanischen oder elektronischen Wegmesssystem kontrolliert oder gesteuert. Das Wegmesssystem sorgt dafür, dass bei eingespanntem Drehblock 6 die an derselben Verschiebeeinheit 2.1 bzw. 2.2 angreifenden Antriebsmittel 21.11, 21.12 bzw. 21.21, 21.22 stets gleichzeitig und parallel zueinander wirken. Die beiden Verschiebeeinheiten 2.1, 2.2 sind jedoch unabhängig voneinander ansteuerbar und verschiebbar, um ein schnelles Auswechseln des Drehblocks zu ermöglichen.

Mindestens eine, vorzugsweise aber zwei oder mehr Seitenflächen 60.3, 60.5 des prismatischen Drehblocks 6 tragen mindestens eine erste Formhälfte 61.1, 61.2 mit je einem ersten Formeinsatz 63.1, 63.2; der prismatische Drehblock 6 dient also als Formträger. Die Formaufspannplatten 7.1, 7.2 tragen je eine zweite Formhälfte 62.1, 62.2 mit je einem zweiten Formeinsatz 64.1, 64.2. Erste Formeinsätze 63.1, 63.2 und/oder zweite Formeinsätze 64.1, 64.2 sind mit (in Fig. 1 und 2 nicht dargestellten) formgebenden Hohlräumen ausgestattet. Wenn die Formaufspannplatten 7.1, 7.2 mit Hilfe der Antriebsmittel gegen den Drehblock 6 gepresst werden, fügen sich die ersten und zweiten Formhälften 61.1, 61.2, 62.1, 62.2 bzw. Formeinsätze 63.1, 63.2, 64.1, 64.2 zu Spritzgiessformen zusammen, in welche aus Einspritzstationen 71.1, 71.2 Schmelze eingespritzt werden kann. Zur eindeutigen gegenseitigen Positionierung der ersten und zweiten Formhälften 61.1, 61.2, 62.1, 62.2 sind diese vorzugsweise mit Führungen, bspw. Zylinderstiften 65.1-6 und entsprechenden Bohrungen 66.1-4, ausgestattet.

Zum Drehen des prismatischen Drehblocks 6 gibt es verschiedene Vorgehensweisen. In einer ersten Variante können in einem ersten Schritt die Verschiebeeinheiten 2.1, 2.2 gleichzeitig und parallel zueinander, den prismatischen Drehblock 6 tragend, zusammen mit der verschiebbaren Formaufspannplatte 7.2 von der stationären Formaufspannplatte 7.1 weggefahren werden. In einem zweiten Schritt werden dann die Verschiebeeinheiten 2.1, 2.2 gleichzeitig und parallel zueinander, den prismatischen Drehblock 6 tragend, von der verschiebbaren Formaufspannplatte 7.2 in Richtung der stationären Formaufspannplatte 7.1 gefahren und bspw. in der Mitte zwischen den Formaufspannplatten 7.1, 7.2 angehalten. In dieser Position wird dann in einem dritten Schritt der prismatische Drehblock 6 um 180° gedreht. Verschiebeeinheiten 2.1, 2.2 und Drehblock 6 werden in einem vierten Schritt wieder zur verschiebbaren Formaufspannplatte 7.2 gefahren und in einem fünften Schritt zusammen mit letzterer zur stationären Formaufspannplatte 7.1 gefahren. In einer zweiten Variante könnte in einem ersten Schritt die verschiebbare Formaufspannplatte 7.2 von Verschiebeeinheiten 2.1, 2.2, Drehblock 6 und stationärer Formaufspannplatte 7.1 weggefahren werden. In einem zweiten Schritt werden Verschiebeeinheiten 2.1, 2.2 und Drehblock 6 etwa in die Mitte zwischen die Formaufspannplatten 7.1, 7.2 gefahren und angehalten. In einem dritten Schritt wird der Drehblock 6 um 180° gedreht. In einem Vierten Schritt werden Verschiebeeinheiten 2.1, 2.2 und Drehblock 6 zur stationären Formaufspannplatte 7.1 zurückgefahren, und in einem fünften Schritt wird die verschiebbare Formaufspannplatte zu Verschiebeeinheiten 2.1, 2.2, Drehblock 6 und stationärer Formaufspannplatte 7.1 zurückgefahren. Weitere Varianten sind für den Fachmann bei Kenntnis der Erfindung durchführbar.

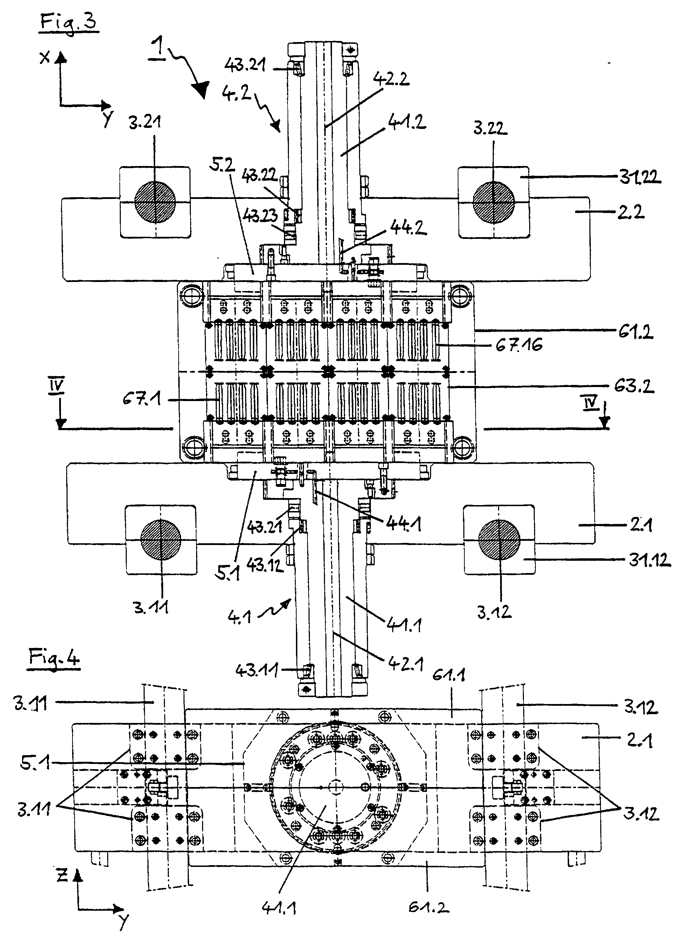

**Figur 3** zeigt eine Frontalansicht einer Ausführungsform der erfindungsgemässen Haltevorrichtung, welche von derjenigen der Figuren 1 und 2 leicht verschieden ist. **Figur 4** zeigt eine Draufsicht auf einen Teil der Haltevorrichtung von Fig. 3. In dieser Ausführungsform sind die Linearführungen 31.11, 31.12, 31.21, 31.22 für die Holmen 3.11, 3.12, 3.21, 3.22 an Aussenseiten 23.1, 23.2 der Verschiebeeinheiten 2.1, 2.2 angebracht. Die Dreheinheiten 4.1, 4.2 sind mittels Lager 43.11-13, 43.21-23 auf den jeweiligen Verschiebeeinheiten 2.1, 2.2 drehbar gelagert.

Durch entsprechende Kanäle oder Leitungen 44.1, 44.2 in der ersten Welle 41.1 und/oder der zweiten Welle 41.2 werden Medien wie Gase, Flüssigkeiten oder elektrischer Strom zum Drehblock 6 geführt. Dabei ist es vorteilhaft, Fluide wie Gase und/oder Flüssigkeiten durch die erste, unten angebrachte Welle 41.1 und den elektrischen Strom durch die zweite, oben angebrachte Welle 41.2 zu führen, um unerwünschte elektrische Kontakte und Verunreinigungen bei Lecks zu vermeiden. Zwischen den Haltemitteln 5.1, 5.2 und dem Drehblock 6 sind (nicht dargestellte) normierte Schnittstellen für die Übergabe der Medien vorgesehen. In der offenen Formhälfte 61.2 sind formgebenden Hohlräume 67.1-16 für die Aufnahme von Schmelze sichtbar.

Die Erfindung ermöglicht dem Fachmann auch die Realisierung anderer Ausführungsformen, als hier beschrieben sind. So könnten die Haltemittel 5.1, 5.2 bspw. in x-Richtung relativ zueinander verschiebbar sein.

## Patentansprüche

1. Haltevorrichtung (1) für mindestens eine Form, Formhälfte (61.1, 61.2) oder einen Formträger in einer Spritztgiessmaschine, **gekennzeichnet durch** mindestens zwei Haltemittel (5.1, 5.2) zum lösbaren Einspannen der mindestens einen Form, Formhälfte (61.1, 61.2) oder des Formträgers, wobei die mindestens zwei Haltemittel (5.1, 5.2) relativ zueinander verschiebbar sind.

2. Haltevorrichtung (1) nach Anspruch 1, **dadurch gekennzeichnet, dass** sie zwei Verschiebeeinheiten (2.1, 2.2) aufweist, welche relativ zueinander in einer Richtung (z) verschiebbar sind, und dass an jeder der zwei Verschiebeeinheiten (2.1, 2.2) ein Haltemittel (5.1, 5.2) derart angebracht ist, dass die mindestens eine Form, Formhälfte (61.1, 61.2) oder der Formträger zwischen den Haltemitteln (5.1, 5.2) reversibel einspannbar ist, wenn sich die zwei Verschiebeeinheiten (2.1, 2.2) in einer bestimmten gegenseitigen Lage befinden.

3. Haltevorrichtung (1) nach Anspruch 1 oder 2, **dadurch gekennzeichnet, dass** mindestens ein Haltemittel (5.1, 5.2) um eine verschiebbare Achse (42.1, 42.2) drehbar ist.

4. Haltevorrichtung (1) nach den Ansprüchen 2 und 3, **dadurch gekennzeichnet, dass** auf jeder Verschiebeeinheit (2.1, 2.2) eine Dreheinheit (4.1, 42) angebracht ist, welche mit der jeweiligen Verschiebeeinheit (2.1, 2.2) verschiebbar und um eine mit der jeweiligen Verschiebeeinheit (2.1, 2.2) verschiebbare, zur Verschieberichtung (z) senkrechten Achse (42.1, 42.2) drehbar ist, und dass die Haltemittel (5.1, 5.2) auf je einer Dreheinheit (4.1, 4.2) befestigt sind.

5. Haltevorrichtung (1) nach Anspruch 4, **dadurch gekennzeichnet, dass** die Verschiebeeinheiten (2.1, 2.2) in eine bestimmte gegenseitige Lage verschiebbar sind, in welcher die Dreheinheiten (4.1, 4.2) einander gegenüberliegen, ihre Achsen (42.1, 42.2) zusammenfallen und die Haltemittel (5.1, 5.2) einen bestimmten Abstand (d) voneinander aufweisen.

6. Haltevorrichtung (1) nach Anspruch 2, **dadurch gekennzeichnet, dass** die Verschiebeeinheiten (2.1, 2.2) auf parallel zueinander verlaufenden Holmen (3.11, 3.12, 3.21, 3.22) geführt sind.

7. Haltevorrichtung (1) nach einem der Ansprüche 1-6, **gekennzeichnet durch** Antriebsmittel (21.21, 21.22) zur Verschiebung der Haltemittel (5.1, 5.2) relativ zueinander oder relativ zu einem Teil (7.2) der Spritzgiessmaschine.

8. Haltevorrichtung (1) nach einem der Ansprüche 1-7, **gekennzeichnet durch** Kontroll- oder Steuermittel zur Kontrolle und/oder Steuerung der Verschiebung.

9. Haltevorrichtung (1) nach einem der Ansprüche 3-8, **gekennzeichnet durch** Drehantriebsmittel zur Drehung mindestens eines Haltemittels (5.1, 5.2) um eine verschiebbare Achse (42.1, 42.2).

10. Haltevorrichtung (1) nach einem der Ansprüche 3-9, **gekennzeichnet durch** Drehkontroll- oder Drehsteuermittel zur Kontrolle und/oder Steuerung der Drehung.

11. Formträger, einsetzbar in die Haltevorrichtung (1) nach einem der Ansprüche 1-10, **dadnrch gekennzeichnet**, dass er als prismatischer Körper mit zwei Grundflächen (60.1, 60.2) und mehr als zwei Seitenflächen (60.3-60.6) ausgebildet ist, und dass mindestens eine Seitenfläche (60.3, 60.5) eine Spritzgiessform oder eine Spritzgiessformhälfte (61.1, 61.2) trägt.

12. Formträger nach Anspruch 11, **dadurch gekennzeichnet, dass** er als Würfel mit zwei Grundflächen (60.1, 60.2) und vier Seitenflächen (60.3-60.6) ausgebildet ist.

13. Spritzgiessmaschine, beinhaltend die Haltevorrichtung (1) nach einem der Ansprüche 2-10, **dadurch gekennzeichnet, dass** sie zwei Formaufspannplatten (7.1, 7.2), von denen eine Formaufspannplatte (7.1) fest mit der Maschine verbunden, die andere Formausfspannplatte (7.2) in derselben einen Richtung (z) wie die Haltemittel (5.1, 5.2) der Haltevorrichtung (1) verschiebbar ist, aufweist, und dass die Haltevorrichtung (1) zwischen den beiden Formaufspannplatten (7.1, 7.2) verschiebbar angebracht ist.

14. Spritzgiessmaschine nach Anspruch 13, beinhaltend einen Formträger nach Anspruch 11 oder 12, **dadurch gekennzeichnet, dass** der Formträger mindestens eine erste Formhälfte (61.1, 61.2) mit je einem ersten Formeinsatz (63.1, 63.2) trägt, dass die Formaufspannplatten (7.1, 7.2) je eine zweite Formhälfte (62.1, 62.2) mit je einem zweiten Formeinsatz (64.1, 64.2) tragen, und dass sich die ersten und zweiten Formhälften bzw. Formeinsätze zu Spritzgiessformen, in welche aus Einspritzstationen (71.1, 71.2) Schmelze einspritzbar ist, zusammenfügen, wenn die Formaufspannplatten (7.1, 7.2) gegen den Formträger gepresst werden.

15. Verfahren zum Entfernen einer Form, Formhälfte (61.1, 61.2) oder eines Formträgers aus einer Haltevorrichtung (1) nach einem der Ansprüche 1-10, **dadurch gekennzeichnet, dass** die Haltemittel (5.1, 5.2) relativ zueinander so weit verschoben werden, dass sie die Form, Formhälfte (61.1, 61.2) oder den Formträger freigeben und dass die Form, Formhälfte (61.1, 61.2) oder der Formträger aus der Haltevorrichtung (1) entnehmbar ist.

16. Verfahren zum Einsetzen einer Form, Formhälfte (61.1, 61.2) oder eines Formträgers in eine Haltevorrichtung (1) nach einem der Ansprüche 2-10, **dadurch gekennzeichnet, dass** die Haltemittel (5.1, 5.2) relativ zueinander so weit verschoben werden, dass sie einen das Einsetzen der Form, Formhälfte (61.1, 61.2) oder des Formträgers erlaubenden Abstand (s) voneinander anfweisen, dass die Form, Formhälfte (61.1, 61.2) oder der Formträger in die Haltevorrichtung (1) eingesetzt wird und dass daraufhin die Haltemittel (5.1, 52) relativ zueinander in die eine bestimmte gegenseitige Lage verschoben werden, so dass sie die Form, Formhälfte (61.1, 61.29 oder den Formträger einspannen.

## Claims

1. Holding device (1) for at least one mould, mould half (61.1, 61.2) or for a die holder in an injection moulding machine, **characterized by** at least two holding means (5.1, 5.2) for the releasable clamping of the at least one mould, mould half (61.1, 61.2) or of the die holder, whereby the at least two holding means (5.1, 5.2) are displaceable relative to one another.

2. Holding device (1) in accordance with claim 1, **characterized in that** it has two displacement units (2.1, 2.2), which are displaceable relative to one another in a direction (z), and **in that** on each of the two displacement units (2.1, 2.2) a holding means (5.1, 5.2) is attached in such a manner, that the at least one mould, mould half (61.1, 61.2) or the die holder is reversibly clampable between the holding means (5.1, 5.2), when the two displacement units (2.1, 2.2) are in a certain position relative to one another.

3. Holding device (1) in accordance with claim 1 or 2, **characterized in that** at least one holding means (5.1, 5.2) is rotatable around a displaceable axis (42.1, 42.2).

4. Holding device (1) in accordance with the claims 2 and 3, **characterized in that** on each displacement unit (2.1, 2.2) a rotating unit (4.1, 4.2) is attached, which is displaceable with the corresponding displacement unit (2.1, 2.2) and rotatable around an axis (42.1, 42.2) vertical to the direction of displacement (z), and that the holding means (5.1, 5.2) are each attached to a rotating unit (4.1, 4.2).

5. Holding device (1) in accordance with claim 4, **characterized in that** the displacement units (2.1, 2.2) is displaceable to a certain relative position to one another, in which the rotating units (4.1, 4.2) are opposite one another, their axes (42.1, 42.2) coincide and the holding means (5.1, 5.2) have a certain distance (d) from one another.

6. Holding device (1) in accordance with claim 2, **characterized in that** the displacement units (2.1, 2.2) are guided on spars (3.11, 3.12, 3.21, 3.22), which are parallel to one another.

7. Holding device (1) in accordance with one of the claims 1-6, **characterized by** driving means (21.21, 21.22) for the displacement of the holding means (5.1, 5.2) relative to one another or relative to a part (7.2) of the injection moulding machine.

8. Holding device (1) in accordance with one of the claims 1-7, **characterized by** control or regulating means for the control and/or regulation of the displacement.

9. Holding device (1) in accordance with one of the claims 3-8, **characterized by** rotation driving means for the rotating of at least one holding means (5.1, 5.2) around a displaceable axis (42.1, 42.2).

10. Holding device (1) in accordance with one of the claims 3-9, **characterized by** rotation control or rotation regulation means for the control and/or regulation of the rotation.

11. A die holder, insertable into the holding device (1) in accordance with one of the claims 1-10, **characterized in that** it is designed as a prism-shaped body with two base surfaces (60.1, 60.2) and more than two side surfaces (60.3-60.6), and that at least one side surface (60.3, 60.5) accommodates an injection mould or an injection mould half.

12. A die holder in accordance with claim 11, **characterized in that** it is designed as a cube with two base surfaces (60.1, 60.2) and four side surfaces (60.3-60.6).

13. Injection moulding machine containing the holding device (1) in accordance with one of the claims 2-10, **characterized in that** it has two mould holder plates (7.1, 7.2), of which one mould holder plate (7.1) is permanently attached to the machine, the other mould holder plate (7.2) is displaceable in the same direction (z) as the holding means (5.1, 5.2) of the holding device (1), and that the holding device (1) it displaceably attached between the two mould holder plates (7.1, 7.2).

14. Injection moulding machine in accordance with claim 13, containing a die holder in accordance with claim 11 or 12, **characterized in that** the die holder accommodates at least a first mould half (61.1, 61.2), each with a first mould insert (63.1, 63.2), that the mould holder plates (7.1, 7.2) each accommodate a second mould half (62.1, 62.2), each with a second mould insert (64.1, 64.2), and that the first and second mould halves, resp., mould inserts come together to become injection moulds, into which molten mass is injectable from injection stations (71.1, 71.2), when the mould holder plates (7.1, 7.2) are pressed against the die holder.

15. Process for the removal of a mould, mould half (61.1, 61.2) or of a die holder from a holding device (1) in accordance with one of the claims 1-10, **characterized in that** the holding means (5.1, 5.2) are displaced relative to one another to such an extent that they release the mould, mould half (61.1, 61.2) or the die holder , and that the mould, mould half (61.1, 61.2) or the die holder are removable from the holding device (1).

16. Process for the insertion of a mould, mould half (61.1, 61.2) or of a die holder into a holding device (1) in accordance with one of the claims 2-10, **characterized in that** the holding means (5.1, 5.2) are displaced relative to one another to such an extent, that they have a distance (s) from one another, which enables the insertion of the mould, mould half (61.1, 61.2) or of the die holder, that the mould, mould half (61.1, 61.2) or the die holder is inserted into the holding device (1) and that thereupon the holding means (5.1, 5.2) are displaced relative to one another into a certain position, so that they clamp the mould, mould half (61.1, 61.2) or the die holder.

## Revendications

1. Dispositif de maintien (1) d'au moins un moule, un demi-moule (61.1, 61.2) ou d'un support de moule d'une machine de moulage par injection, **caractérisé par** au moins deux moyens de maintien (5.1, 5.2) servant à serrer de manière libérable le moule, le demi-moule (61.1, 61.2) ou le support de moule au moins présents, dans lequel les deux moyens de maintien (5.1, 5.2) au moins présents peuvent coulisser l'un par rapport à l'autre.

2. Dispositif de maintien (1) selon la revendication 1, **caractérisé en ce qu'**il présente deux unités de déplacement (2.1, 2.2) qui peuvent se déplacer l'une par rapport à l'autre dans une direction (z), et **en ce que** sur chacune des deux unités de déplacement (2.1, 2.2), un moyen de maintien (5.1, 5.2) est installé de telle sorte que le moule, le demi-moule (61.1, 61.2) ou le support de moule au moins présents peuvent être serrés de manière réversible entre les moyens de maintien (5.1, 5.2) lorsque les deux unités de déplacement (2.1, 2.2) se trouvent dans une position relative définie.

3. Dispositif de maintien (1) selon les revendications 1 ou 2, **caractérisé en ce qu'**au moins un moyen de maintien (5.1, 5.2) peut tourner autour d'un axe (42.1, 42.2) apte à être déplacé.

4. Dispositif de maintien (1) selon les revendications 2 et 3, **caractérisé en ce que** sur chaque unité de déplacement (2.1, 2.2) est installée une unité de rotation (4.1, 4.2) qui peut se déplacer avec l'unité de déplacement correspondante (2.1, 2.2) et qui peut tourner autour d'un axe (42.1, 42.2) perpendiculaire à la direction de déplacement (z) et ce déplacer avec l'unité de déplacement (2.1, 2.2) correspondante, et **en ce que** les moyens de maintien (5.1, 5.2) sont fixés chacun sur une unité d'entraînement (4.1, 4.2).

5. Dispositif de maintien (1) selon la revendication 4, **caractérisé en ce que** les unités de déplacement (2.1, 2.2) peuvent être déplacées dans une position relative définie dans laquelle les unités de rotation (4.1, 4.2) sont situées l'une au-dessus de l'autre, leur axe (42.1, 42.2) coïncidant et les moyens de maintien (5.1, 5.2) présentant l'un par rapport à l'autre une distance (d) définie.

6. Dispositif de maintien (1) selon la revendication 2, **caractérisé en ce que** les unités de déplacement (2.1, 2.2) sont guidées sur des montants (3.11, 3.12, 3.21, 3.22) qui s'étendent parallèlement l'un à l'autre.

7. Dispositif de maintien (1) selon l'une des revendications 1 à 6, **caractérisé par** des moyens d'entraînement (21.21, 21.22) pour le déplacement des moyens de maintien (5.1, 5.2) l'un par rapport à l'autre ou par rapport à une partie (7.2) de la machine de moulage par injection.

8. Dispositif de maintien (1) selon l'une des revendications 1 à 7, **caractérisé par** des moyens de contrôle ou de commande pour le contrôle et/ou la commande du déplacement.

9. Dispositif de maintien (1) selon l'une des revendications 3 à 8, **caractérisé par** des moyens d'entraînement en rotation pour la mise en rotation d'au moins un moyen de maintien (5.1, 5.2) autour d'un axe (42.1, 42.2) apte à être déplacé.

10. Dispositif de maintien (1) selon l'une des revendications 3 à 9, **caractérisé par** des moyens de contrôle ou de commande de la rotation pour le contrôle et/ou la commande de la rotation.

11. Support de moule utilisable dans un dispositif de maintien (1) selon l'une des revendications 1 à 10, **caractérisé en ce qu'**il est configuré comme corps prismatique présentant deux surfaces de base (60.1, 60.2) et plus de deux surfaces latérales (60.3, 60.6), et **en ce qu'**au moins une surface latérale (60.3, 60.5) porte un moule de moulage par injection ou un demi-moule de moulage par injection (61.1, 61.2).

12. Support de moule selon la revendication 11, **caractérisé en ce qu'**il est configuré comme cube présentant deux surfaces de base (60.1, 60.2) et quatre surfaces latérales (60.3 - 60.6).

13. Machine de moulage par injection contenant le dispositif de maintien (1) sur l'une des revendications 2 à 10, **caractérisé en ce qu'**elle présente deux plaques (7.1, 7.2) de serrage de moule parmi lesquelles une plaque (7.1) de serrage de moule est reliée fixement à la machine, l'autre plaque (7.2) de serrage de moule pouvant être déplacée dans la même direction (z) que les moyens de maintien (5.1, 5.2) du dispositif de maintien (1), et **en ce que** le dispositif de maintien (1) est installé de manière à pouvoir se déplacer entre les deux plaques de serrage de moule (7.1, 7.2).

14. Machine de moulage par injection selon la revendication 13, contenant un support de moule selon la revendication 11 ou 12, **caractérisé en ce que** le support de moule porte au moins un premier demi-moule (61.1, 61.2) qui présente chaque fois une première garniture de moule (63.1, 63.2), **en ce que** les plaques de serrage de moule (7.1, 7.2) portent chacune un deuxième demi-moule (62.1, 62.2) qui présente chaque fois une deuxième garniture de moule (64.1, 61.2), et **en ce que** le premier et le deuxième demi-moule ou la première et la deuxième garniture de moule se rassemblent pour former des moules de moulage par injection dans lesquels de la matière fondue peut être injectée en provenance de postes d'injection (71.1, 71.2) lorsque les plaques (7.1, 7.2) de serrage de moule sont comprimées contre le support de moule.

15. Procédé d'enlèvement d'un moule, d'un demi-moule (61.1, 61.2) ou d'un support de moule d'un dispositif de maintien (1) selon l'une des revendications 1 à 10, **caractérisé en ce que** les moyens de maintien (5.1, 5.2) sont déplacés l'un par rapport à l'autre sur une distance suffisante pour libérer le moule, les demi-moules (61.1, 61.2) ou le support de moule, et pour que le moule, les demi-moules (61.1, 61.2) ou le support de moule puissent être enlevés du dispositif de maintien (1).

16. Procédé d'insertion d'un moule, d'un demi-moule (61.1, 61.2) ou d'un support de moule dans un dispositif de maintien (1) selon l'une des revendications 2 à 10, **caractérisé en ce que** les moyens de maintien (5.1, 5.2) sont écartés l'un de l'autre d'une distance suffisante pour qu'ils présentent l'un par rapport à l'autre un écart (s) permettant l'insertion du moule, des demi-moules (61.1, 61.2) ou du support de moule, **en ce que** le moule, les demi-moules (61.1, 61.2) ou le support de moule sont insérés dans le dispositif de maintien (1) et **en ce qu'**ensuite les moyens de maintien (5.1, 5.2) sont déplacés l'un par rapport à l'autre dans une position relative mutuelle qui permet de serrer le moule, les demi-moules (61.1, 61.2) ou le support de moule.
